# EUROPEAN PATENT SPECIFICATION

(11) **EP 1 961 699 B1**
(45) Date of publication and mention of the grant of the patent: **04.03.2015**
(21) Application number: 06834542.0
(22) Date of filing: 06.12.2006
(51) Int. Cl.: C01B 7/04, C01B 7/03, C01B 31/28

(54) **METHOD FOR PRODUCTION OF CHLORINE**
VERFAHREN ZUR HERSTELLUNG VON CHLOR
PROCEDE DE FABRICATION DE CHLORE

(30) Priority: 08.12.2005 JP 2005354817
(43) Date of publication of application: 27.08.2008
(73) Proprietor: Sumitomo Chemical Company, Limited, Tokyo 104-8260 (JP)
(72) Inventor: MORI, Yasuhiko, Niihama-shi, Ehime 792-0017, (JP); OMOTO, Norihito, Niihama-shi, Ehime 792-0025 (JP)
(74) Representative: Vossius & Partner
(86) International application number: PCT/JP2006/324787
(87) International publication number: WO 2007/066810

(56) References cited:
- WO-A1-2004/063094
- WO-A1-2005/012173
- WO-A1-2005/090231
- WO-A2-2004/037718
- JP-A- 2000 211 911
- JP-A- 2001 516 333
- JP-A- 2004 345 883
- JP-A- 2005 306 734
- MORI Y. ET AL: 'Ensan Sanka Process no Kaihatsu to Kogyoka' PETROTECH vol. 29, no. 2, 01 February 2006, pages 109 - 113, XP003014103

## Description

### TECHNICAL FIELD

The present invention relates to a process for producing chlorine as defined in the claims.

### BACKGROUND ART

Chlorine is useful as a raw material for vinyl chloride, phosgene or the like, and it is also well known that the same is obtained by oxidation of hydrogen chloride. It is known that hydrogen chloride obtained as a by-product of synthesis of isocyanate by reacting phosgene and primary amine is utilized as this hydrogen chloride. Chlorine is produced by oxidizing the hydrogen chloride obtained in this manner through a catalytic gas phase reaction in the presence of a catalyst.

If sulfuric components are contained in the hydrogen chloride serving as the raw material for producing chlorine, a bad influence is exerted on the catalyst in the oxidation of the hydrogen chloride. Therefore, the quantities of the sulfuric components contained in the hydrogen chloride must be reduced to the minimum. As the origins of the sulfuric components contained in the hydrogen chloride that is a by-product of synthesis of isocyanate, carbonyl sulfide, hydrogen sulfide, carbon dioxide and sulfur dioxide contained in carbon monoxide employed in the synthesis of phosgene, sulfur dioxide and a mist of sulfuric acid contained in chlorine similarly serving as a raw material for synthesizing phosgene and a sulfuric component contained in amine employed for isocyanation can be listed. While most of these sulfuric components are conceivably mixed into the isocyanate or discharged from the system along with high-boiling residues in the synthesis of the isocyanate, parts thereof are mixed into the by-produced hydrogen chloride, to influence catalytic activity in the aforementioned oxidation of the hydrogen chloride.

As a method of purifying this hydrogen chloride employed as the raw material for producing chlorine, a method of removing impurities such as sulfuric components by previously water-absorbing the hydrogen chloride and thereafter stripping the same is known, for example (refer to Japanese Patent Laying-Open No. 2000-34105 (corresponding to BE1011944A4 and CN1201013A), for example). A method of converting sulfuric components to sulfuric acid ions by adding an oxidizer when water-absorbing the hydrogen chloride so that the sulfuric components are hardly mixed in stripping of hydrogen chloride gas is also known (refer to Japanese Patent Laying-Open No. 2004-345883, for example). However, these methods are not only complicated but also have such a problem that energy for stripping the hydrogen chloride is uneconomically remarkable.

WO 2005/012173 A1 discloses a process for producing phosgene comprising: introducing a carbon monoxide stream to a metal oxide impregnated activated carbon, reducing a hydrogen sulfide concentration in the carbon monoxide stream to produce a cleaned stream, wherein a cleaned stream hydrogen sulfide concentration is less than or equal to about 20 ppm, and reacting carbon monoxide in the cleaned stream with chlorine to produce phosgene.

WO 2004/063094 A1 relates to a method for producing carbon monoxide gas which is as free as possible of sulphur compounds.

WO 2004/037718 A2 discloses a method for producing chlorine from hydrochloric acid.

### DISCLOSURE OF THE INVENTION

The present invention has been proposed in order to solve the aforementioned problems, and an object thereof is to provide a method capable of reducing a sulfur content in hydrogen chloride employed for producing chlorine to a level practically not obstructive to a reaction without performing water absorption and stripping of the hydrogen chloride.

The inventors have made deep examinations, to find that a sulfuric component contained in hydrogen chloride gas is mainly derived from a sulfuric component contained in carbon monoxide employed for synthesizing phosgene that is used as a raw material for synthesizing isocyanate and the sulfur content in hydrogen chloride that is a by-product of synthesis of isocyanate can be remarkably reduced by limiting the sulfur content in the carbon monoxide to not more than 2000 vol. ppb so that chlorine can be stably produced over a long period by oxidizing the hydrogen chloride, and completed the present invention. In other words, the present invention is as follows:

The process for producing chlorine according to the present invention is a process for producing chlorine, using hydrogen chloride as a raw material that is a by-product of synthesis of isocyanate by reacting phosgene and primary amine and oxidizing the hydrogen chloride through a catalytic gas phase reaction in the presence of a catalyst, wherein a sulfur content in carbon monoxide employed as a raw material for the phosgene is set to not more than 2000 vol. ppb.

In this case, an unreacted oxygen in the oxidation of the hydrogen chloride is preferably reused after washing as a part of a raw material for the oxidation of the hydrogen chloride.

Preferably in the process for producing chloride according to the present invention, a sulfur content in the chlorine produced by the oxidation of the hydrogen chloride is set to not more than 1000 vol. ppb, and the chlorine is used as a part and/or all of the raw material for the phosgene.

In the process for producing chlorine according to the present invention, the sulfur content in the hydrogen chloride that is a by-product of synthesis of isocyanate can be remarkably reduced without performing water absorption and stripping of the hydrogen chloride, whereby chlorine can be stably produced by oxidizing the hydrogen chloride over a long period.

### BRIEF DESCRIPTION OF THE DRAWINGS

Fig. 1 is a diagram schematically showing the process for producing chlorine according to the present invention.
Fig. 2 is a conceptual diagram showing a preferable example of an oxidation process for hydrogen chloride through a catalytic gas phase reaction in the process for producing chlorine according to the present invention.

### BEST MODES FOR CARRYING OUT THE INVENTION

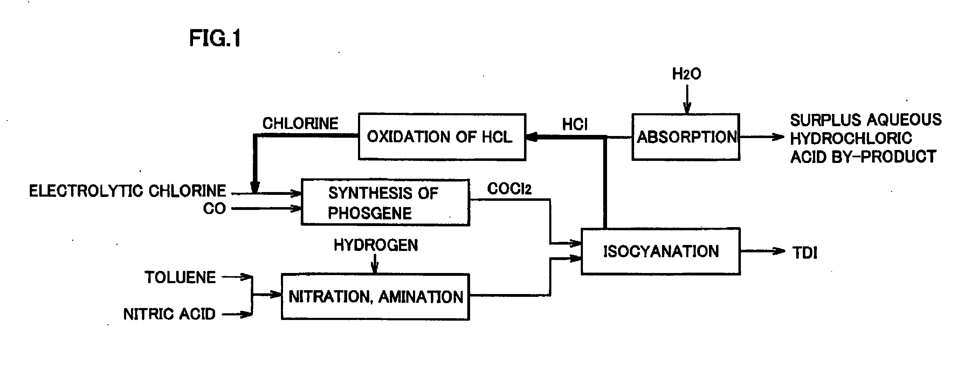

Fig. 1 is a diagram schematically showing the process for producing chlorine according to the present invention. According to the present invention, chlorine is produced by oxidizing hydrogen chloride through a catalytic gas phase reaction in the presence of a catalyst, and hydrogen chloride that is a by-product of synthesis of isocyanate by reacting phosgene and primary amine is employed as the hydrogen chloride used for this oxidation. A method of synthesizing the phosgene serving as the raw material for this isocyanate is reacting chlorine with carbon monoxide. For example, the phosgene can be synthesized by reacting chlorine and carbon monoxide with each other, as described in Ullmanns Encyclopedia of Industrial Chemistry, Sixth, Completely Revised Edition, vol. 26, p. 71-81. In the example shown in Fig. 1, the phosgene is synthesized by reusing chlorine obtained by this process for producing chlorine and mixing the same into electrolytic chlorine, and reacting carbon monoxide with the same. The process for producing chlorine according to the present invention is characterized in that the quantity of a sulfuric component contained in the carbon monoxide serving as the raw material for this phosgene is set to not more than 2000 vol. ppb (preferably not more than 1000 voL ppb).

As a method of efficiently removing the sulfuric component from the carbon monoxide, a proper well-known method can be employed. As described in International Patent Laying-Open No. 93/13184, for example, the content of hydrogen sulfide in carbon monoxide gas can be set to 2000 ppb by employing activated carbon containing iron oxide. As described in US 2004/014190, for example, the sulfuric component may be removed from the carbon monoxide by adding water vapor to carbon monoxide gas, converting an organic sulfur compound to hydrogen sulfide in the presence of active alumina and thereafter absorbing/removing the resultant hydrogen sulfide. According to the method disclosed in the latter document, the sulfur content in the carbon monoxide can be reduced to 2 mg/m³ (≒ 750 vol. ppb).

A method of synthesizing the primary amine is not particularly limited, but the primary amine can be synthesized by a proper well-known method. For example, the primary amine can be synthesized by employing toluene and nitric acid as raw materials and performing nitration and amination by reacting the same with hydrogen. The isocyanate is synthesized by reacting the phosgene and the primary amine obtained in the aforementioned manner.

In the process for producing chlorine according to the present invention, the quantity of the sulfuric component contained in the carbon monoxide serving as the raw material for the phosgene is so reduced that the sulfur content in the hydrogen chloride for producing chlorine can be reduced as a result by oxidizing the hydrogen chloride that is a by-product of synthesis of isocyanate using this phosgene. The concentration of the sulfuric component contained in the carbon monoxide treated by the aforementioned process is not more than 2000 vol. ppb, preferably not more than 1000 vol. ppb. This concentration of the sulfuric component indicates a value measured by a gas chromatograph, for example.

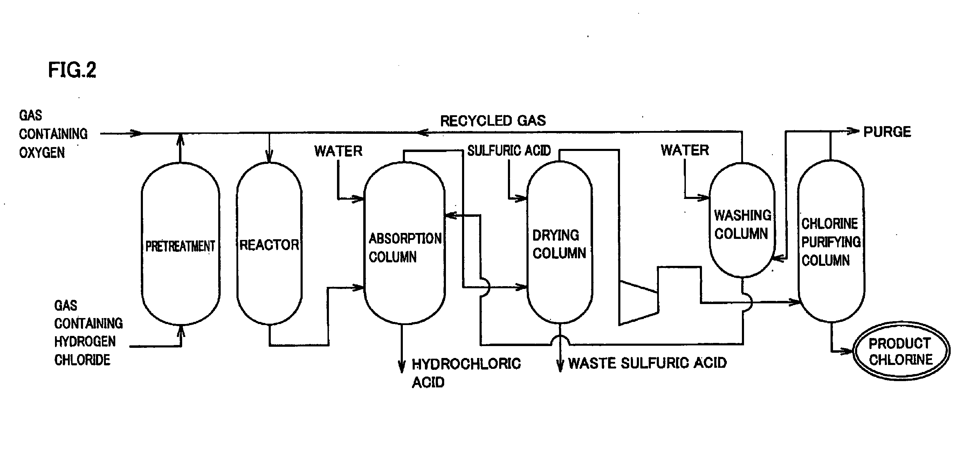

Fig. 2 is a conceptual diagram showing a preferable example of the oxidation process for the hydrogen chloride through the catalytic gas phase reaction in the process for producing chlorine according to the present invention. In general, the oxidation of the hydrogen chloride through the catalytic gas phase reaction in the present invention basically includes four steps, i.e., [1] a reaction step, [2] an absorption step, [3] a drying step, and [4] a purification step.

### [1] Reaction Step

This is a step of obtaining gas mainly composed of chlorine, water, unreacted hydrogen chloride and unreacted oxygen by oxidizing gas containing hydrogen chloride with oxygen in the presence of a catalyst. As the gas containing hydrogen chloride, the hydrogen chloride that is a by-product of synthesis of isocyanate by reacting phosgene and primary amine is employed, as shown in Fig. 1. The concentration of the hydrogen chloride in this gas is at least 10 volume %, preferably at least 50 volume %, more preferably at least 80 volume %. If the concentration of the hydrogen chloride is lower than 10 volume %, the concentration of oxygen in gas mainly composed of unreacted oxygen obtained in the purification step described later is reduced, and it may be necessary to reduce the quantity of this gas supplied to the reaction step in a circulation step described later.

As components other than the hydrogen chloride in the gas containing the hydrogen chloride, chlorinated aromatic hydrocarbon such as orthodichlorobenzene or monochlorobenzene, and aromatic hydrocarbon such as toluene or benzene, and chlorinated hydrocarbon such as vinyl chloride, 1,2-dichloroethane, methyl chloride, chlorine tetrachloride or ethyl chloride, and hydrocarbon such as methane, acetylene, ethylene or propylene, and inorganic gas such as nitrogen, argon, carbon dioxide, carbon monoxide, phosgene, hydrogen, carbonyl sulfide, hydrogen sulfide or sulfur dioxide can be listed. In the reaction between the hydrogen chloride and oxygen, each of the chlorinated aromatic hydrocarbon and the chlorinated hydrocarbon is oxidized to carbon dioxide and water, the carbon monoxide is oxidized to carbon dioxide, and the phosgene is oxidized to carbon dioxide and chlorine.

While oxygen or air is used as the gas containing oxygen, the concentration of oxygen is preferably at least 80 volume %, more preferably at least 90 volume %. If the concentration of oxygen is smaller than 80 volume %, the oxygen concentration in the gas mainly composed of unreacted oxygen obtained in the purification step is reduced, and it may be necessary to reduce the quantity of this gas supplied to the reaction step in the circulation step. The gas containing oxygen in the concentration of at least 80 volume % can be obtained by a general industrial method such as pressure swinging or deep separation of air. As components other than hydrogen chloride in the gas containing oxygen, nitrogen (N₂), argon (Ar) etc. can be listed.

While the theoretical molar quantity of the oxygen with respect to 1 mole of the hydrogen chloride is 0.25 moles, the oxygen is preferably supplied by a quantity exceeding the theoretical quantity, more preferably by 0.25 to 2 moles with respect to 1 mole of the hydrogen chloride. The degree of conversion of the hydrogen chloride may be reduced if the quantity of the oxygen is excessively small, while it may be difficult to separate the formed chlorine and the unreacted oxygen from each other if the quantity of the oxygen is excessively large.

In the oxidation of the hydrogen chloride with oxygen, a catalyst in which ruthenium oxide is carried on a metallic oxide carrier .is preferably employed. The catalyst in which ruthenium oxide is carried on the metallic oxide carrier is so charged in a fixed bed reactor that an influence by a catalytic poison can be reduced. Further, the ruthenium oxide is so employed that chlorine can be produced at a temperature advantageous in equilibrium with no choking trouble of a pipe or the like resulting from evaporation or scattering of the catalytic component and without requiring a step of treating the evaporated or scattered catalytic component, whereby the steps of recovering the unreacted hydrogen chloride and water, separating the chlorine and the unreacted oxygen from each other and supplying the unreacted oxygen to the reaction step can be simplified, and hence the facility cost and the operating cost can be lowly suppressed.

The content of the ruthenium oxide in the catalyst is preferably 0.1 to 20 weight %. This is because catalytic activity is low and the degree of conversion of the hydrogen chloride tends to lower if the content of the ruthenium oxide in the catalyst is less than 0.1 weight %, and because the catalyst price tends to increase if the content of the ruthenium oxide in the catalyst exceeds 20 weight %.

The particle diameter of the ruthenium oxide, not particularly limited, is preferably in the range of 1 to 10 nm. The said particle diameter of the ruthenium oxide denotes a value measured by observation with an electron microscope, for example.

As the metallic oxide carrier in the catalyst in the present invention, a carrier made of a metallic oxide such as γ-alumina, α-alumna, rutile titania, anatase titania, silica or zirconia can be listed, for example. In particular, a metallic oxide carrier made of alumina or titania whose reaction activity is high and hard to reduce is preferably employed.

More specifically, a carrier ruthenium oxide catalyst or a ruthenium oxide composite oxide catalyst having a ruthenium oxide content of 1 to 20 weight % with a ruthenium oxide central diameter of 1.0 to 10.0 nm described in Japanese Patent Laying-Open No. 10-338502 (corresponding to DE19748299A and CN1182717A) can be listed as a particularly preferable catalyst in the present invention, while the catalyst is not limited to this.

The catalyst is employed in a spherical granular shape, a columnar pellet shape, an extruded shape, a ring shape, a honeycomb shape or a granular shape of a proper size pulverized/classified after molding. In this case, the catalyst diameter is preferably not more than 5 mm. This is because activity may be reduced if the catalyst diameter exceeds 5 mm. While the lower limit of the catalyst diameter is not particularly limited, a catalyst having a diameter of at least 0.5 mm is generally employed since pressure loss in a catalyst packed bed is increased if the catalyst diameter is excessively reduced. The catalyst diameter denotes the diameter of spheres in the spherical granular shape, the diameter of sections in the columnar pellet shape, or the maximum diameter of sections in each of the remaining shapes.

A fixed bed gas phase circulation system employing a fixed bed reactor applied as a reaction system. A reactor performing temperature control of at least two reaction zones included in reaction zones in the heat exchange system by a method described in Japanese Patent Laying-Open No. 2000-272907 (corresponding to EP 1170250A), for example, may be employed as the fixed bed reactor in the present invention. In such a reactor dividing reaction zones into at least two, problems can be substantially avoided by preparing two first-stage reaction zones and alternately switching and using the first stages before second and subsequent stages are poisoned. However, there is also such an aspect that it is disadvantageous to prepare two high-priced reactors in view of the cost.

As the fixed bed reactor, a reactor formed by a single reaction tube or a plurality of serially coupled fixed bed reaction tubes with a jacket provided on the outer side(s) of the reaction tube(s) can be listed. The temperature in the reaction tube(s) is controlled by a heating medium of the jacket. Reaction heat resulting from reactions can be recovered by generating steam through the heating medium. While fused salt, an organic heating medium or molten metal can be listed as the heating medium, the fused salt is preferable in view of thermal stability and easiness in handling. As to the composition of the fused salt, a mixture of 50 weight % of potassium nitrate and 50 weight % of sodium nitrite or a mixture of 53 weight % of potassium nitrate, 40 weight % of sodium nitrite and 7 weight % of sodium nitrate can be listed. Metal, glass or ceramic can be listed as the material used for the reaction tube(s). While Ni, SUS316L, SUS310, SUS304, Hastelloy B, Hastelloy C or Inconel can be listed as a metallic material, Ni is preferable among these, and Ni having a carbon content of not more than 0.02 weight % is particularly preferable.

In the process for producing chlorine according to the present invention, the sulfur content in an inlet of the reactor is preferably not more than 1000 vol. ppb, more preferably not more than 500 vol. ppb. This is because, if the sulfur concentration in the inlet of the reactor exceeds 1000 vol. ppb, poisoning of sulfur can be avoided by exchanging not the entire catalyst but only a poisoned part of the catalyst, while operation of a plant must be stopped during the exchange and extremely complicated operation may be necessary. According to the present invention, the sulfur concentration in the inlet of the reactor can be reduced to the aforementioned degree by reducing the quantity of the sulfuric component contained in the carbon monoxide serving as the raw material for the phosgen employed for the synthesis of the isocyanate to 2000 vol. ppb. In the present invention, the reactor can be operated substantially with no problem and a sulfur concentration remarkably high as compared with the prior art can be allowed if the sulfur concentration in the inlet of the reactor is not more than 1000 vol. ppb, whereby the sulfuric component may not be completely removed with a large-scale apparatus or complicated operation. Therefore, the operation can be continued over a long period without recharging the catalyst. This sulfur concentration in the inlet of the reactor can be measured by gas chromatography, for example.

### [2] Absorption Step

This is a step of obtaining gas mainly composed of chlorine and unreacted oxygen by bringing the gas mainly composed of water, unreacted hydrogen chloride and unreacted oxygen obtained in the reaction step into contact with water and/or hydrochloric acid water and/or cooling the same thereby recovering a solution mainly composed of hydrogen chloride and water. This step is carried out at a contact temperature of 0 to 100°C with a pressure of 0.05 to 1 MPa. The concentration of the hydrochloric acid water brought into contact is preferably not more than 25 weight %. A method described in Japanese Patent Laying-Open No. 2003-261306 is preferably employed, in order to prevent deposition of a chlorine hydrate.

The obtained solution can be employed for pH adjustment of an electrolytic bath, neutralization of boiler field water or condensation/transfer reaction between aniline and formalin, as the raw material for electrolysis of the hydrofluoric acid water or for food addition as such or after removing chlorine contained in the solution by heating and/or bubbling of inactive gas such as nitrogen. It is also possible to obtain HCl gas by entirely and partially stripping hydrochloric acid and improve a chlorine yield as a raw material as described in Fig. 3.173, p. 315 of Soda Handbook 1998, or to set the chlorine yield substantially to 100 % by removing water from residual hydrochloric acid after the said stripping by a method described in Japanese Patent laying-Open No. 2001-139305 (corresponding to EP1099666A).

### [3] Drying Step

This is a step of obtaining dehydrated gas by removing moisture from the gas obtained in the absorption step.

The moisture content in the gas after the drying step is not more than 0.5 mg/l, preferably not more than 0.1 mg/l. While sulfuric acid, calcium chloride, magnesium perchlorate or zeolite can be listed as a compound removing the moisture from the gas, the sulfuric acid is preferable in particular since the same can be easily discharged after use. As a method of removing the moisture from the gas, a method of bringing the gas mainly composed of chlorine and unreacted oxygen obtained in the absorption step with the sulfuric acid can be listed.

The concentration of the sulfuric acid added to the step is preferably at least 90 weight %. If the sulfuric acid concentration is smaller than 90 weight %, the moisture may not be sufficiently removed from the gas. This step is carried out at a contact temperature of 0 to 80°C with a pressure of 0.05 to 1 MPa. When the sulfuric acid is used as a drying agent, a mist of the sulfuric acid is preferably removed immediately after the drying step. For example, a Brink mist eliminator or a method described in Japanese Patent Laying-Open No. 2003-181235 can be applied.

### [4] Purification Step

This is a step of obtaining chlorine by separating the dehydrated gas obtained in the drying step into a liquid or gas mainly composed of chlorine and gas mainly composed of unreacted oxygen. As a method of separating the gas into the liquid or gas mainly composed of chlorine and the gas mainly composed of unreacted oxygen, a method of compressing and/or cooling the gas and/or a well-known method (Japanese Patent Laying-Open No. 3-262514 (corresponding to EP458990A1) or National Patent Publication Gazette No. 11-500954 (corresponding to WO96/26784)) can be listed. For example, the liquid mainly composed of chlorine is separated from the gas mainly composed of unreacted oxygen by compressing and/or cooling the gas obtained in the drying step. Liquefaction of chlorine is carried out in such a range that chlorine defined by the pressure and the temperature can exist in a liquid state. While the compression pressure is reduced and hence compressive force can be reduced as the temperature is reduced in this range, the compression pressure and the cooling temperature are industrially decided in consideration of the optimum economical condition in this range due to a problem of facilities or the like. In general operation, this step is carried out with a chlorine liquefaction compression pressure of 0.5 to 5 MPa and a cooling temperature of -70 to 40°C.

The obtained liquid mainly composed of chlorine can be employed as a raw material for vinyl chloride or phosgene as such or after the same is partially or entirely evaporated. When the liquid is employed after the same is partially or entirely evaporated, it is possible to reduce a cooling load resulting from an external coolant necessary for the liquefaction of chlorine in the gas obtained in the drying step simultaneously with obtaining part of heat necessary for the evaporation by performing heat exchange of the gas obtained in the drying step. Similarly, the liquid can also be employed for preliminary cooling of liquid flon, or for cooling or condensation of a circulating liquid in a chlorine distilling column.

In the process for producing chlorine according to the present invention, the unreacted oxygen in the oxidation of the hydrogen chloride is preferably reused after washing as a part of a raw material for the oxidation of the hydrogen chloride. In other words, the liquid or gas mainly composed of chlorine and the gas mainly composed of unreacted oxygen after the separation are partially or entirely supplied to the reaction step in the aforementioned purification step in the example shown in Fig. 2. Thus, the oxygen consumption rate can be advantageously reduced. This washing of the unreacted oxygen is not particularly limited, but can be properly performed with a washing column, as is well known in the art.

The sulfur content in the chlorine produced in the process according to the present invention is preferably not more than 1000 vol. ppb, more preferably not more than 500 vol. ppb. If the sulfur content in the chlorine exceeds 1000 vol. ppb, the sulfuric component may be mixed into the process of synthesizing the isocyanate and recycled to the process of oxidizing the hydrogen chloride again. This sulfur content in the chlorine denotes a value measured by collecting the sulfuric component in water and thereafter analyzing the collected liquid by ion chromatography, for example. Such chlorine obtained in the present invention is preferably used as a part and/or all of the raw material for the phosgene used for the aforementioned synthesis of the isocyanate. Thus, the life of the catalyst in the process of oxidizing the hydrogen chloride can be advantageously increased.

### INDUSTRIAL APPLICABILITY

In the process for producing chlorine according to the present invention, the sulfur content in the hydrogen chloride that is a by-product of synthesis of isocyanate can be remarkably reduced without performing water absorption and stripping of the hydrogen chloride, whereby production of chlorine by oxidation of hydrogen chloride can be stably performed over a long period.

## Claims

1. A process for producing chlorine, which comprises reacting chlorine with carbon monoxide to produce phosgene, reacting the phosgene with a primary amine to produce isocyanate and hydrogen chloride as a by-product, and oxidizing the hydrogen chloride through a catalytic gas phase reaction in the presence of a catalyst, wherein a sulfur content in carbon monoxide employed as a raw material for the phosgene is set to not more than 2000 vol. ppb, and wherein the process for producing chlorine is conducted without performing water absorption and stripping of the hydrogen chloride that is a by-product of the isocyanate production.

2. The process according to claim 1, wherein an unreacted oxygen in the oxidation of the hydrogen chloride is reused after washing as a part of a raw material for the oxidation of the hydrogen chloride.

3. The process according to claim 1 or 2, wherein a sulfur content in the chlorine produced by the oxidation of the hydrogen chloride is set to not more than 1000 vol. ppb and the chlorine is used as a part and/or all of the raw material for the phosgene.

4. The process according to claim 1 or 2, wherein a sulfur content in carbon monoxide employed as a raw material for the phosgene is set to not more than 1000 vol. ppb.

## Patentansprüche

1. Ein Verfahren zur Herstellung von Chlor, welches Umsetzen von Chlor mit Kohlenmonoxid, um Phosgen herzustellen, Umsetzen des Phosgens mit einem primären Amin, um Isocyanat und Chlorwasserstoff als ein Nebenprodukt herzustellen und Oxidieren des Chlorwasserstoffs durch eine katalytische Gasphasenreaktion in Gegenwart eines Katalysators umfasst, wobei ein Schwefelgehalt im Kohlenmonoxid, das als ein Ausgangsmaterial für das Phosgen eingesetzt wird, auf nicht mehr als 2000 Vol. ppb eingestellt wird und wobei das Verfahren zur Herstellung von Chlor ohne Durchführen von Wasserabsorption und Strippen des Chlorwasserstoffs, welcher ein Nebenprodukt der Isocyanatherstellung ist, durchgeführt wird.

2. Das Verfahren nach Anspruch 1, wobei ein nicht umgesetzter Sauerstoff bei der Oxidierung des Chlorwasserstoffs nach dem Waschen als Teil eines Ausgangsmaterials für die Oxidierung des Chlorwasserstoffs wiederverwendet wird.

3. Das Verfahren nach Anspruch 1 oder 2, wobei ein Schwefelgehalt in dem bei der Oxidierung des Chlorwasserstoffs hergestellten Chlors auf nicht mehr als 1000 Vol. ppb eingestellt wird und das Chlor als ein Teil und/oder als Gesamtheit des Ausgangsmaterials für das Phosgen verwendet wird.

4. Das Verfahren nach Anspruch 1 oder 2, wobei ein Schwefelgehalt im Kohlenmonoxid, das als ein Ausgangsmaterial für das Phosgen verwendet wird, auf nicht mehr als 1000 Vol. ppb eingestellt wird.

## Revendications

1. Procédé de production de chlore, qui comprend la réaction de chlorure avec du monoxyde de carbone pour produire du phosgène, la réaction du phosgène avec une amine primaire pour produire de l'isocyanate et du chlorure d'hydrogène en tant que sous-produit, et l'oxydation du chlorure d'hydrogène par réaction catalytique en phase gazeuse en présence d'un catalyseur, dans lequel la teneur en soufre dans le monoxyde de carbone utilisé comme matière première pour le phosgène est fixée à pas plus de 2000 ppb en volume, et dans lequel le procédé de production de chlore est conduit sans effectuer d'absorption d'eau ni d'extraction du chlorure d'hydrogène qui est un sous-produit de la production d'isocyanate.

2. Procédé selon la revendication 1, dans lequel un oxygène n'ayant pas réagi dans l'oxydation du chlorure d'hydrogène est réutilisé après lavage en tant que partie d'une matière première pour l'oxydation du chlorure d'hydrogène.

3. Procédé selon la revendication 1 ou la revendication 2, dans lequel la teneur en soufre dans le chlore produit par l'oxydation du chlorure d'hydrogène est fixée à pas plus de 1000 ppb en volume et le chlorure est utilisé en tant que partie et/ou totalité de la matière première pour le phosgène.

4. Procédé selon la revendication 1 ou la revendication 2, dans lequel la teneur en soufre dans le monoxyde de carbone utilisé comme matière première pour le phosgène est fixée à pas plus de 1000 ppb en volume.
